# EUROPÄISCHE PATENTANMELDUNG

(11) **EP 0 916 529 A2**
(43) Veröffentlichungstag der Anmeldung: **19.05.1999**
(21) Anmeldenummer: 98120207.0
(22) Anmeldetag: 24.10.1998
(51) Int. Cl.: B60G 17/052, B60G 17/015

(54) **Schaltungsanordnung für ein luftdruckgefedertes Fahrzeug sowie Verfahren zur Regelung des Luftdruckes eines luftdruckgefedertes Fahrzeuges**

(30) Priorität: 14.11.1997 DE 19750446
(71) Anmelder: DaimlerChrysler AG, 70567 Stuttgart (DE)
(72) Erfinder: Fischer, Jörg, 73728 Esslingen (DE); Kann, Olaf, 70376 Stuttgart (DE)

(57) **Zusammenfassung**

Die vorliegende Erfindung betrifft eine Schaltungsanordnung für ein luftdruckgefedertes Fahrzeug, bei dem eine Regelung des Luftdruckes erfolgt, indem auf jeder Fahrzeugseite in Abhängigkeit von einer Regelgröße, die den Abstand zwischen dem Fahrzeugrahmen und der jeweiligen Achse repräsentiert, der Luftdruck zumindest dieser Achse auf der jeweiligen Fahrzeugseite eingestellt wird, wobei betreffend die Erfassung der Regelgröße zwei Achsen zusammengefaßt sind derart, daß die jeweilige Regelgröße auf der einen Fahrzeugseite an der einen Achse erfaßt wird und auf der anderen Fahrzeugseite an der anderen Achse. Weiterhin betrifft die Erfindung ein Verfahren zur Regelung des Luftdruckes eines luftdruckgefederten Fahrzeuges mit einer solchen Schaltungsanordnung wobei im Falle, daß auf der einen Fahrzeugseite an der einen Achse festgestellt wird, daß die Regelgröße einen bestimmten Schwellwert übersteigt, der Luftdruck auf dieser Fahrzeugseite verringert wird, wobei weiterhin geschlossen wird, daß die eine Achse frei hängt, wenn nach einer bestimmten vorgegebenen Zeitspanne die Regelgröße nach wie vor den bestimmten Schwellwert übersteigt.

## Beschreibung

Die vorliegende Erfindung betrifft eine Schaltungsanordnung für ein luftdruckgefedertes Fahrzeug nach dem Oberbegriff des Patentanspruches 1 sowie ein Verfahren zur Regelung des Luftdruckes eines luftdruckgefederten Fahrzeuges nach dem Oberbegriff des Patentanspruches 3.

Es sind bereits luftdruckgefederte Fahrzeuge bekannt, bei denen eine Regelung des Luftdruckes in Abhängigkeit von dem Abstand des Fahrzeugrahmens zur Achse des Fahrzeuges erfolgt, wobei die Regelung des Luftdruckes individuell für jede Fahrzeugseite erfolgt. Durch die Regelung des Luftdruckes individuell für jede Fahrzeugseite kann beispielsweise eine ungleichmäßige Beladung des Fahrzeuges ausgeglichen werden. Eine solche Schaltungsanordnung ist beispielsweise bekannt aus der Zeitschrift DE-Z: O+P Ölhydraulik und Pneumatik, Jahrgang 38, 1994, Heft Nr. 8, Seiten 484 bis 488, insbesondere Seite 488. Entsprechend der dortigen Darstellung sind die beiden Sensoren für die einzelnen Fahrzeugseiten bezogen auf die jeweilige Fahrzeugseite identisch angeordnet.

Demgegenüber ist es die Aufgabe der vorliegenden Erfindung, das Regelverhalten der Luftdruckfederung eines Fahrzeuges zu verbessern, möglichst ohne den Hardware-Aufwand zu vergrößern.

Diese Aufgabe wird erfindungsgemäß mit einer Schaltungsanordnung nach Anspruch 1 gelöst, wonach zur Erfassung der jeweiligen Regelgröße die beiden Achsen derart zusammengefaßt sind daß die jeweilige Regelgröße auf der einen Fahrzeugseite an der einen Achse erfaßt wird und auf der anderen Fahrzeugseite an der anderen Achse.

Durch diese Schaltungsanordnung ist der Aufwand hinsichtlich der benötigten Hardware identisch zu dem Aufwand, der notwendig war, um die bekannte Erfassung der Regelgrößen durchführen zu können. Durch die Anbringung der Sensoren kann allerdings unterschieden werden, ob ein Überschreiten eines Schwellwertes durch eine der Regelgrößen damit zusammenhängt, daß der Luftdruck an dieser Seite zu groß ist oder daß - beispielsweise infolge einer Fahrt abseits befestigter Straßen - eine der Achsen in der Luft hängt. Insgesamt läßt sich also mit der Schaltungsanordnung bei identischem Hardwareaufwand eine Verbesserung der Leistungsfähigkeit erzielen. Um dieselbe Leistungsfähigkeit unter Beibehaltung der bekannten Sensoranordnung zu erlangen, wäre es notwendig, wenigstens einen weiteren Sensor an der Achse anzubringen, die durch die beiden bekannten Sensoren nicht überprüft wird.

Bei der Schaltungsanordnung nach Anspruch 2 wird der Luftdruck auf jeder Fahrzeugseite für die beiden Achsen gemeinsam eingestellt.

Dadurch wird vorteilhaft der Aufwand der geregelten Luftdruckfederung minimiert. Aufgrund der Zahl der verwendeten Sensoren ist eine individuelle Einstellung des Luftdruckes jeder Achse auf jeder Fahrzeugseite ohnehin nicht sinnvoll.

Anspruch 3 beschreibt ein Verfahren zur Regelung des Luftdruckes eines luftdruckgefederten Fahrzeuges mit einer der vorgenannten Schaltungsanordnungen, wobei im Falle, daß auf der einen Fahrzeugseite an der einen Achse festgestellt wird, daß die Regelgröße einen bestimmten Schwellwert übersteigt, der Luftdruck auf dieser Fahrzeugseite verringert wird, wobei geschlossen wird, daß die eine Achse frei hängt, wenn nach einer bestimmten vorgegebenen Zeitspanne die Regelgröße nach wie vor den bestimmten Schwellwert übersteigt.

Die Zeitspanne ist so bemessen,daß sich üblicherweise wieder ein Gleichgewichtszustand einstellt. Daraus resultiert für diese Zeitspanne ein typischer Wert in der Größenordnung von einigen Sekunden.

Durch die Art der Auswertung der Sensorsignale der erfindungsgemäß angebrachten Sensoren können also die beiden Fälle unterschieden werden, daß der Abstand zwischen dem Rahmen des Fahrzeuges und der Achse zu groß ist wegen eines überhöhten Luftdruckes in der Luftdruckfederung oder daß die entsprechende Achse des Fahrzeuges aufgrund der Fahrbedingungen frei hängt. Vorteilhaft wird damit ein solches Fahrzeug auch im Gelände - beispielsweise als Baustellenfahrzeug - sinnvoll nutzbar.

Bei dem Verfahren nach Anspruch 4 wird bei einem erkannten Freihängen der einen Achse des Fahrzeuges der Luftdruck auch auf der Fahrzeugseite verringert, an der sich an dieser Achse kein Sensor befindet.

Dadurch kann vorteilhaft vermieden werden, daß Beschädigungen auftreten können infolge eines zu großen Luftdruckes, gegen den kein mechanisches "Gegengewicht" existiert, weil die entsprechende Achse frei hängt. Solche Beschädigungen können beispielsweise den bzw. die entsprechenden Stoßdämpfer betreffen.

Bei dem Verfahren nach Anspruch 5 wird im Falle, daß beide Regelgrößen einen bestimmten Schwellwert übersteigen, der Luftdruck auf beiden Fahrzeugseiten verringert, wobei ein Fehler erkannt wird, wenn beide Regelgrößen nach einer bestimmten vorgegebenen Zeitspanne nach wie vor den bestimmten Schwellwert übersteigen.

Dies würde bedeuten, daß beide Achsen frei hängen, weswegen dann auf einen Fehler geschlossen wird.

Die beiden Achsen können beispielsweise die beiden Hinterachsen bei einem dreiachsigen Fahrzeug mit zwei Hinterachsen sein. Vorzugsweise sind bei einem solchen Fahrzeug die beiden Hinterachsen angetrieben.

Ein Ausführungsbeispiel der Erfindung ist in der Zeichnung dargestellt. Es zeigt dabei im einzelnen:
- Fig. 1:: eine Prinzipdarstellung eines dreiachsigen Fahrzeuges und einer erfindungsgemäßen Schaltungsanordnung sowie
- Fig. 2:: ein Blockdiagramm des erfindungsgemäßen Verfahrens zur Auswertung der gemessenen Signale der erfindungsgemäßen Schaltungsanordnung.

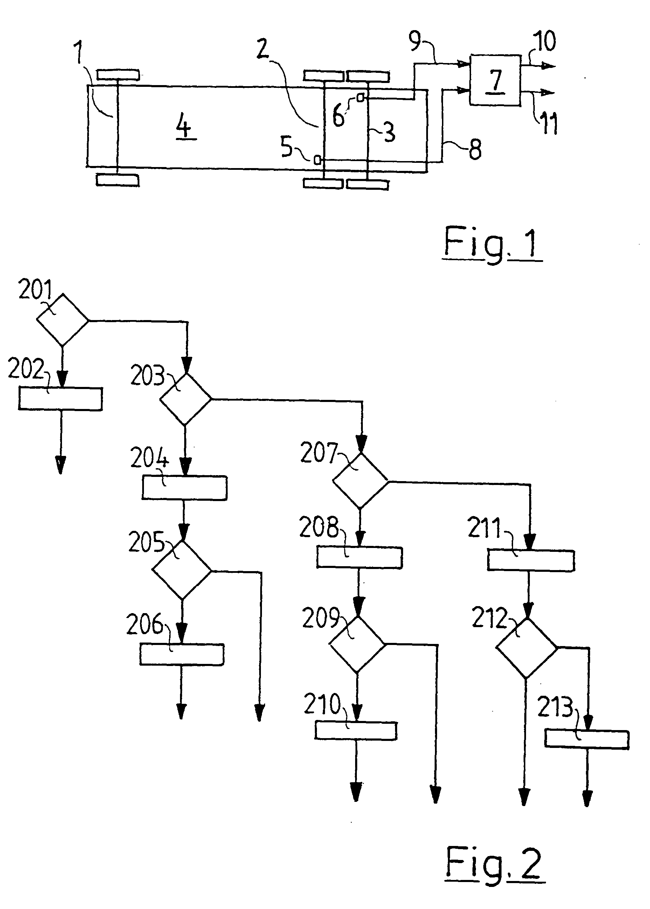

Figur 1 zeigt ein dreiachsiges Fahrzeug 4 mit einer Vorderachse 1 und zwei Hinterachsen 2 und 3. An jeder der Hinterachsen 2 und 3 ist jeweils ein Sensor 5 und 6 angebracht, mit dem der Abstand zwischen dem Rahmen des Fahrzeuges und der jeweiligen Achse erfaßt werden kann.

Dieses Fahrzeug 4 weist eine nicht im einzelnen dargestellte Luftdruckfederung auf, wobei die beiden Achsen 2 und 3 zusammengefaßt sind. Das bedeutet, daß in den Bälgen der Achsen 2 und 3 auf jeder Fahrzeugseite derselbe Druck anliegt. Die Drucke in den Bälgen der linken und der rechten Fahrzeugseite können dabei unterschiedlich sein, wodurch beispielsweise eine ungleichmäßige Beladung des Fahrzeuges ausgeglichen werden kann, die beispielsweise bei einem Pritschenfahrzeug oder einem Kipper vorkommen kann.

Wie in der Darstellung der Figur 1 zu sehen ist, sind die beiden Sensoren 5 und 6 an den beiden Achsen 2 und 3 auf unterschiedlichen Fahrzeugseiten angebracht, um diese eventuelle ungleichmäßige Beladung erkennen zu können.

Die Signale der Sensoren 5 und 6 werden über Leitungen 8 und 9 einem Mikroprozessor 7 zugeführt, in dem diese Signale verarbeitet werden. Von diesem Mikroprozessor 7 werden über Leitungen 10 und 11 die Bälge auf den beiden Fahrzeugseiten des Fahrzeuges 1 angesteuert.

Indem die Signale der Sensoren 5 und 6 entsprechend ausgewertet werden, kann einerseits der bereits angesprochene Zustand der ungleichmäßigen Beladung bezogen auf die Fahrzeugseite erkannt werden. Da die Sensoren 5 und 6 an unterschiedlichen Achsen 2 und 3 angebracht sind, kann weiterhin erkannt werden, ob eine der Achsen 2 oder 3 frei hängt.

Ein Blockdiagramm zur Auswertung der Signale der Sensoren 5 und 6 ist in Figur 2 dargestellt.

Zunächst wird in dem Schritt 201 geprüft, ob sowohl das Signal des Sensors 5 als auch das Signal des Sensors 6 einen Wert aufweisen, der kleiner ist als ein bestimmter Schwellwert. Dies bedeutet, daß der jeweilige Abstand zwischen dem Fahrzeugrahmen und der Achse kleiner ist als der vorgegebene Schwellwert.

Ist dies der Fall, erfolgt ein Übergang zu dem Schritt 202, in dem eine übliche seitenweise Regelung des Luftdruckes in den Bälgen der beiden Fahrzeugseiten vorgenommen wird. Das heißt, die Bälge werden entsprechend be- und entlüftet. Der aktuelle Programmdurchlauf wird damit beendet.

Wenn die Überprüfing in dem Schritt 201 verneint wurde, ist zumindest eines der Signale der Sensoren 5 und/oder 6 größer als der Schwellwert. Es erfolgt dann von dem Schritt 201 ein Übergang zu dem Schritt 203, in dem überprüft wird, ob sowohl das Signal des Sensors 5 als auch das Signal des Sensors 6 größer sind als der bestimmte Schwellwert.

Ist dies der Fall, erfolgt ein Übergang zu dem Schritt 204, in dem die Bälge der linken und der rechten Fahrzeugseite entlüftet werden. Nach einer bestimmten Zeitspanne, in der sich wieder ein Gleichgewichtszustand einstellt, wird in dem Schritt 205 überprüft, ob nach wie vor sowohl das Signal des Sensors 5 als auch das Signal des Sensors 6 größer sind als der Schwellwert.

Ist dies nach wie vor der Fall, erfolgt ein Übergang zu dem Schritt 206, in dem ein Fehler erkannt wird, weil dieser Zustand bedeuten würde, daß beide Achsen 2 und 3 frei hängen.

Wurde in dem Schritt 205 festgestellt, daß wenigstens eines der beiden Signale der Sensoren 5 und 6 wiederum Kleiner ist als der Schwellwert, wird der Zustand für in Ordnung befunden und der aktuelle Programmdurchlauf beendet.

Wenn die Abfrage in dem Schritt 203 verneint wird, bedeutet dies, daß genau eines der beiden Signale der Sensoren 5 und 6 größer ist als der Schwellwert. Es erfolgt dann ein Übergang zu dem Schritt 207, in dem weiter überprüft wird, welches der Signale der Sensoren 5 oder 6 größer ist als der Schwellwert. Beispielhaft soll im folgenden angenommen werden, daß in dem Schritt 207 überprüft wird, ob das Signal des Sensors 5 größer ist als der Schwellwert.

Ist dies der Fall, erfolgt ein Übergang zu dem Schritt 208, in dem die Bälge auf der linken Fahrzeugseite entlüftet werden. Nach einer bestimmten Zeitspanne, in der sich wieder ein Gleichgewichtszustand einstellt, erfolgt ein Übergang zu dem Schritt 209, in dem überprüft wird, ob das Signal des Sensors 5 nach wie vor größer ist als der Schwellwert.

Ist dies der Fall, erfolgt ein Übergang zu dem Schritt 210, in dem geschlossen wird, daß die Achse 2 frei hängt. Es werden dann auch die Bälge der rechten Fahrzeugseite entlüftet, um eine Beschädigung der Stoßdämpfer dieser Achse 2 zu vermeiden.

Wurde in dem Schritt 209 festgestellt, daß das Signal des Sensors 5 kleiner ist als der Schwellwert, wird der Zustand für in Ordnung befunden und der aktuelle Programmdurchlauf beendet.

Wurde in dem Schritt 207 festgestellt, daß das Signal des Sensors 5 nicht größer ist als der Schwellwert, muß das Signal des Sensors 6 größer sein als der Schwellwert. Eine diesbezügliche Prüfung kann also entfallen. Es ist jedoch auch möglich, in dem Schritt 207 zu überprüfen, ob das Signal des Sensors 6 größer ist als der Schwellwert. Wenn das Signal des Sensors 6 nicht größer ist als der Schwellwert, liegt offensichtlich ein Meßfehler vor. Wurde hingegen festgestellt, daß das Signal des Sensors 6 größer ist als der Schwellwert, erfolgt ein Übergang zu dem Schritt 211, in dem die Bälge der rechten Fahrzeugseite entlüftet werden. Nach einer bestimmten Zeitspanne, in der sich wiederum ein Gleichgewichtszustand einstellt, wird in dem Schritt 212 geprüft, ob das Signal des Sensors 6 kleiner ist als der Schwellwert. Ist dies der Fall, wird der Zustand für in Ordnung befunden und der aktuelle Programmdurchlauf beendet.

Ergibt die Überprüfung in dem Schritt 212, daß das Signal des Sensors 6 nach wie vor größer ist als der Schwellwert, erfolgt ein Übergang zu dem Schritt 213, in dem geschlossen wird, daß die Achse 3 frei hängt. Es werden dann auch die Bälge der linken Fahrzeugseite belüftet, um eine Beschädigung der Stoßdämpfer zu vermeiden.

Mit dem beschriebenen Verfahren der kombinierten Überprüfung der beiden Sensoren 5 und 6 wird sichergestellt, daß die beiden Fahrzeugseiten ohne Zeitverzug richtig eingestellt werden. Es ist beispielsweise auch möglich, die Einstellung der Bälge der beiden Fahrzeugseiten in getrennten Programmteilen vorzunehmen und bei einem entsprechenden "Freihängen" der jeweiligen Achsen eine entsprechende Kennung zu setzen, um den Fehlerfall entsprechend der Überprüfung in dem Schritt 203 erkennen zu können.

## Patentansprüche

1. Schaltungsanordnung für ein luftdruckgefedertes Fahrzeug, bei dem eine Regelung des Luftdruckes erfolgt, indem auf jeder Fahrzeugseite in Abhängigkeit von einer Regelgröße, die den Abstand zwischen dem Fahrzeugrahmen und der Achse repräsentiert, der Luftdruck zumindest dieser Achse auf der jeweiligen Fahrzeugseite eingestellt wird, wobei betreffend die Erfassung der Regelgröße zwei Achsen zusammengefaßt sind, dadurch gekennzeichnet, daß die beiden Achsen derart zusammengefaßt sind, daß die jeweilige Regelgröße auf der einen Fahrzeugseite an der einen Achse erfaßt wird (2, 5) und auf der anderen Fahrzeugseite an der anderen Achse (3, 6).

2. Schaltungsanordnung nach Anspruch 1,
dadurch gekennzeichnet, daß der Luftdruck auf jeder Fahrzeugseite für die beiden Achsen (2, 3) gemeinsam eingestellt wird.

3. Verfahren zur Regelung des Luftdruckes eines luftdruckgefederten Fahrzeuges mit einer Schaltungsanordnung nach Anspruch 1 oder 2,
dadurch gekennzeichnet, daß im Falle, daß auf der einen Fahrzeugseite an der einen Achse festgestellt wird, daß die Regelgröße einen bestimmten Schwellwert übersteigt, der Luftdruck auf dieser Fahrzeugseite verringert wird (208, 211), wobei geschlossen wird, daß die eine Achse frei hängt, wenn nach einer bestimmten vorgegebenen Zeitspanne die Regelgröße nach wie vor den bestimmten Schwellwert übersteigt (209, 212).

4. Verfahren nach Anspruch 3,
dadurch gekennzeichnet, daß bei einem erkannten Freihängen der einen Achse des Fahrzeuges der Luftdruck auch auf der Fahrzeugseite verringert wird, an der sich an dieser Achse kein Sensor befindet (210, 213).

5. Verfahren nach Anspruch 3 oder 4,
dadurch gekennzeichnet, daß im Falle, daß beide Regelgrößen einen bestimmten Schwellwert übersteigen (203), der Luftdruck auf beiden Fahrzeugseiten verringert wird (204), wobei ein Fehler erkannt wird, wenn beide Regelgrößen nach einer bestimmten vorgegebenen Zeitspanne nach wie vor den bestimmten Schwellwert übersteigen (205, 206).
